Europäisches Patentamt

European Patent Office

Office européen des brevets

(19)

(11) Numéro de publication: **0 171 338**
A2

(12) **DEMANDE DE BREVET EUROPEEN**

(21) Numéro de dépôt: 85420133.2

(22) Date de dépôt: 22.07.85

(51) Int. Cl.⁴: **B 05 C 3/09,** A 23 G 3/24, A 23 G 9/24

(30) Priorité: 08.08.84 FR 8412719

(71) Demandeur: **SITEL S.A.R.L., 62, avenue Edouard Herriot, F-39300 Champagnolle (FR)**

(43) Date de publication de la demande: 12.02.86 **Bulletin 86/7**

(72) Inventeur: **Fumey-Badoz, Michel, 62, avenue Edouard Herriot, F-39300 Champagnole (FR)** Inventeur: **Buguet, Christian, 12, impasse des Prés Rollet Challuy, F-58000 Nevers (FR)**

(84) Etats contractants désignés: **AT BE CH DE GB IT LI LU NL SE**

(74) Mandataire: **Moinas, Michel, c/o Cabinet Michel Moinas 13, Chemin du Levant, F-01210 Ferney-Voltaire (FR)**

(54) Appareil d'enrobage par Immersion.

(57) L'appareil comprend:
— une grille (1) servant de support pour les produits à immerger, cette grille (1) ayant une forme en toit d'usine,
— un bâti (5) permettant de descendre la grille (1) pour l'immersion, puis de la remonter,
— un peigne (7) dont les dents (8) prennent appui dans une première position sur les produits (2) à immerger de façon à les maintenir pressés contre la grille (1) lors de l'immersion, les empêchant de flotter, et dont les dents (8), dans une deuxième position, s'insèrent dans la grille (1) pour venir saisir les produits (2) par-dessous et dans une troisième position, les dégager de la grille (1), et enfin
— un guide (12) servant à conduire le peigne (7) dans ses déplacements de droite à gauche et vice versa.
Le guide est constitué de deux parois latérales (4) sur lesquelles est fixée la grille (1) et ces parois (4) sont découpées en forme de toit d'usine tronqué. Des ergots (11) extérieurs équipant le peigne (7) venant prendre appui sur les parois latérales (4).

APPAREIL D'ENROBAGE PAR IMMERSION

La présente invention se rapporte à un appareil d'enrobage par immersion, notamment pour produits alimentaires du genre bonbons ou bâtonnets. Les matières d"enrobage peuvent être par exemple des chocolats, des glaces royales, des pâtes à glacer, des fondants.

Les bonbons enrobés de chocolat sont actuellement fabriqués de deux manières. Une première manière, manuelle, consiste à jeter à l'aide d'une fourchette le bonbon, qu'on appelle en l'occurence l'intérieur, dans un bac où le chocolat est en fusion à 28°. Avec la fourchette, on enfonce l'intérieur dans la masse en fusion et on la ressort après l'avoir secouée pour évacuer l'excédent de chocolat. On râcle la partie inférieure de la fourchette sur le bord du récipient et on dépose le bonbon sur un marbre.

On conçoit aisément que ce mode de fabrication, par son caractère artisanal, ne peut mener qu'à une productivité limitée et est réservée à de petites fabrications, ou à des produits alimentaires de luxe.

On a cherché à automatiser cette fabrication par des machines dans lesquelles un tapis grillagé se déplace sous un rideau de chocolat. On concevra cependant qu'une telle automatisation ne peut convenir qu'à une production de masse, pour des grandes campagnes, car les machines en question sont destinées à traiter des quantités considérables. En outre, tant la mise en route que le nettoyage font que ces machines ne peuvent être mise en oeuvre que pour une production aussi continue que possible. Elles ne conviennent donc pas pour des fabrications trop saisonnières, ou pour de petites campagnes.

L'invention cherche précisément à résoudre ce dilemme, en permettant des productions à échelle humaine, tout en introduisant le plus d'automatisation possible.

Selon l'invention, l'appareil d'enrobage par immersion comprend

- une grille servant de support pour les produits à immerger, cette grille ayant une forme en toit d'usine,

- un bâti permettant de descendre la grille pour l'immersion, puis de la remonter,

- un peigne dont les dents prennent appui dans une première position sur les produits à immerger de façon à les maintenir pressés contre la grille lors de l'immersion, les empêchant de flotter, et dont les dents, dans une deuxième position, s'insèrent dans la grille pour venir saisir les produits par dessous et, dans une troisième position, les dégager de la grille,

- un guide servant à conduire le peigne dans ses déplacements de droite à gauche et vice versa, pour l'amener à volonté dans les première, deuxième et troisième positions.

De préférence, le peigne est multiple sauf pour les intérieurs trop épais.

En variante, l'appareil comprend également un râcleur pour éliminer l'éxcédent d'enrobage avant dégagement des produits enrobés de la grille.

Le guide peut être constitué de deux parois latérales sur lesquelles est fixé la grille. Ces parois sont découpées ou embouties en forme de toit d'usine tronqué, les angles d'inclinaison correspondant aux angles de la forme en toit d'usine de la grille. Des ergots extérieurs équipent le peigne et vienne prendre appui sur les parois latérales. De préférence, le râcleur est multiple et est cons-

— 3 —

titué de barres de râclage traversant les parois latérales par des lumières de guidage inclinées parallèlement à l' inclinaison de la grille, et rendues solidaires les unes des autres. Les barres de râclages peuvent être rendues solidaires au moyen de deux organes de commande coudés, se faisant face; ces organes coudés sont également guidés, chacun, par un ergot prenant place dans une lumière supplémentaire ménagée dans chaque paroi latérale.

Par "toit d'usine", on entend désigner une forme en dent de scie dans laquelle les deux angles d'inclinaison sont différents. Par la suite, on appelera "angle d'inclinaison" l'angle le plus plat par rapport à l'horizontale. L' angle formé par les deux pans inégaux de la grille est indéfférent et on le choisit de préférence inférieur à 90°.

A titre d'indication, l'angle d'inclinaison de la grille et de tous les éléments qui y correspondent est avantageusement de l'ordre de 17 à 25°, par exemple 19°.

L'invention sera mieux comprise en référence au dessin annexé, donné à titre d'exemple non limitatif. Dans ce dessin :

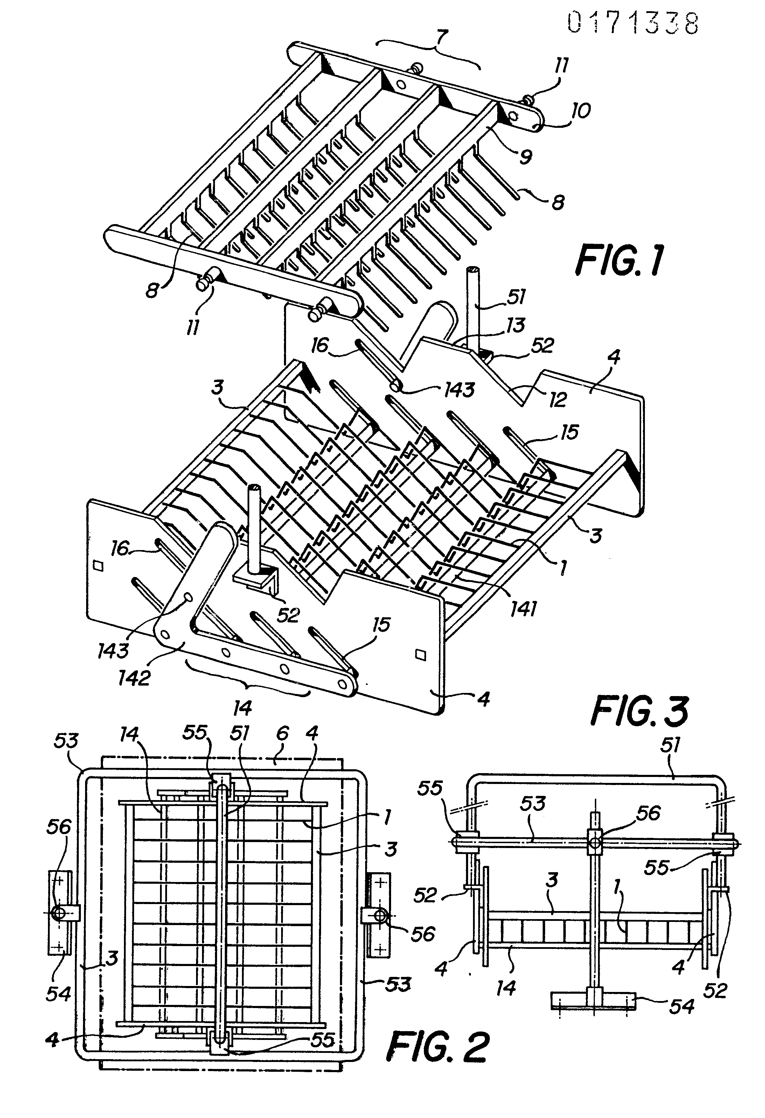

- la figure 1 est une vue en perspective de l'appareil selon l'invention, sans son bâti;

- la figure 2 est une vue de dessus de l'appareil au complet, avec son bâti;

- la figure 3 est une vue de côté du même appareil,

- la figure 4 est une vue en coupe de l'appareil selon l'invention, sans son bâti, ni le peigne;

- la figure 5 est une vue en coupe du même appareil, avec le peigne, celui-ci étant en position de maintien des intérieurs; et

- la figure 6 est une vue en coupe correspondante, dans laquelle le peigne est dans la position préliminaire à la saisie des intérieurs une fois ceux-ci enrobés.

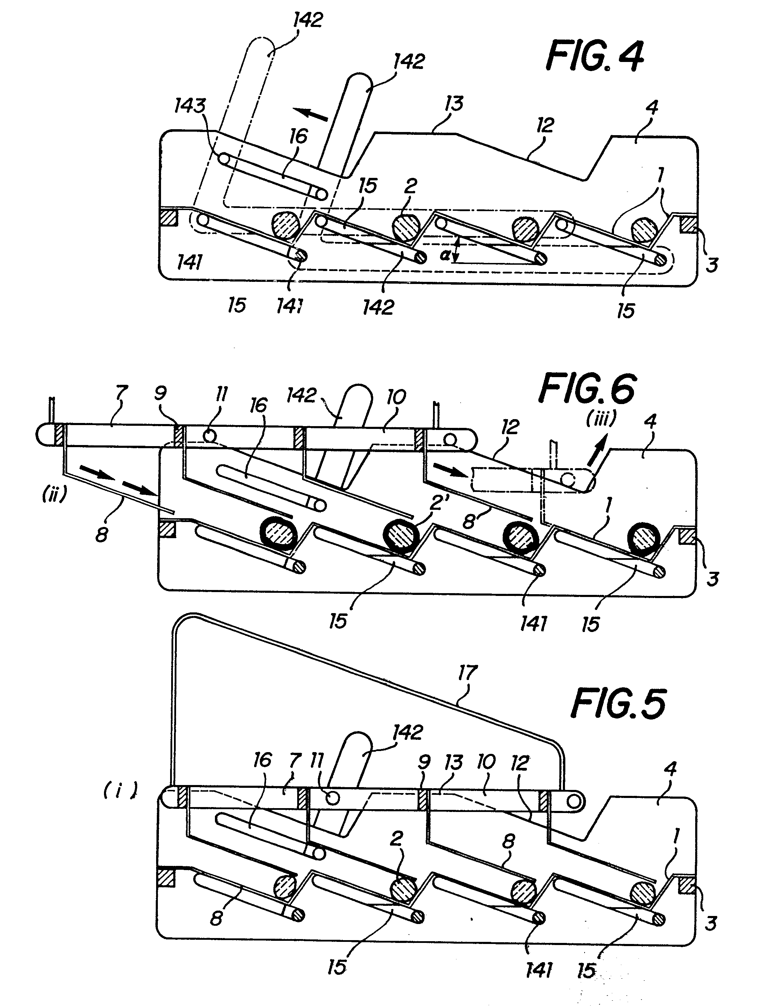

Comme on le voit sur les figures, l'appareil se compose d'une grille 1 qui, en vue de profil, présente une forme en toit d'usine. Comme on le voit plus précisément sur la figure 4, la grille 1 reçoit les intérieurs, par exemple des bonbons ou des pralines 2. Le toit d'usine peut se définir par deux plans d'inclinaison différentes. Ceux-ci étant sensiblement perpendiculaire l'un à l'autre. L'inclinaison utile, qu'on désignera par la suite par "angle d'inclinaison $\alpha$" est l'inclinaison correspondant à l'angle le plus faible, comme on le voit sur la figure 4. Cet angle $\alpha$ peut être par exemple de 19°. Quant à l'autre angle, il est inférieur à 90°, mesuré par rapport au pan de la grille le moins incliné, et est compris de préférence entre 60 et 80°.

La grille 1 est fixée à chaque extrémité à des barres de support 3, lesquelles sont fixées à leur tour sur deux parois latérales 4.

Un bâti 5 permet de descendre la grille 1 pour l'immerger dans un bac 6 dans lequel la matière d'enrobage se trouve en fusion; il peut s'agir par exemple de chocolat.

Le bâti 5 comprend une poignée 51 pour saisir l'appareil, qui est fixé sur les parois latérales 4 par des cornières 52. Le bâti 5 comprend également un élément circulaire 53, placé au dessus de la cuve d'immersion 6, et

0171338

qui est stabilisé par deux pieds 54 placés autour de cette même cuve 6.

Par l'intermédiaire de la poignée 51, on peut donc descendre la grille 1 jusqu'à la plonger dans le bac d'immersion 6, puis la remonter. La poignée 51 peut donc coulisser autour de l'élément circulaire 53 par l'intermédiaire de deux organes 55, qui sont équipés de positions de blocage.
La hauteur des pieds 54, fixant la hauteur de l'élément circulaire 53 autour du bac d'immersion 6, peut être réglée en coulissant et en venant se bloquer autour d'un organe 56.

Un peigne multiple 7 comprend des rangées de dents 8 fixées à des barres transversales 9, qui à leur tour sont fixées sur des barres latérales 10. Celles-ci sont de chaque côté, munies d'ergots 11 dont on verra plus loin la fonction. Signalons d'ores et déjà que ces ergots 11 comprennent chacun une gorge qui va servir au centrage du peigne 7 par rapport à la grille 1.

En effet, l'ensemble est conduit par un guide qui est constitué à la fois des parois latérales 4 qui sont découpées en forme de toit d'usine, correspondant à la forme de la grille 1. Cette forme en toit d'usine est cependant tronquée de façon à ménager des plages horizontales 13. Les ergots 11 précités viennent coopérer avec les parois latérales 4 pour guider le peigne 7 selon les cheminements représentés dans 12 et 13.

Un râcleur multiple 14 et constitué de barres de réglage 141 réunies latéralement par deux barres 142, celles-ci faisant office d'organes de commande. Ces organes 142, qui se font face, sont coudés et sont munis, dans leur partie haute, d'un ergot 143, qui contribuera lui aussi au guidage.

En effet, le râcleur traverse les parois latérales 4

par des lumières 15, en correspondance avec les barres de râclage 141 et dont l'angle d'iclinaison α correspond à celui de la grille. Les ergots supplémentaires 143 prennent appui dans des lumières 16 ménagées en position haute dans les parois latérales 4.

Comme on va le voir plus loin, le peigne multiple 7 peut occuper trois positions schématisées sur les figures 5 et 6. Dans la première position (i), représentée à la figure 5, les ergots 11 sont situés à l'intérieur de la surface matérialisée par les formes en toit d'usine tronquées ménagées dans le guide et reposent sur les intérieurs 2, en prenant appui sur eux et en les maintenant pressés contre la grille 1. On peut ainsi immerger l'ensemble, c'est-à-dire la grille 1 et les intérieurs 2 dans le bac 6 contenant la matière d'enrobage en fusion, sans que les intérieurs 2 remontent à la surface.

Une fois l'immersion réalisée, on se retrouve avec les produits enrobés 2' et on recule le peigne 7 vers l'arrière pour se retrouver dans la position illustrée à la figure 6 sous (ii).

On passe à la position (iii) en déplaçant le peigne 7 de la position illustrée à la figure 6 vers l'avant en suivant les parois inclinées 12. Les dents du peigne 8 viennent alors s'insérer à travers la grille 1, puis on fait pivoter le peigne 7 en avant vers le haut, dans le sens de la flèche (iii) de façon à saisir d'un coup tout les intérieurs enrobés 2'. Pour ce faire, on utilise avantageusement l'anse 17 prévue pour saisir le peigne 7. Ce faisant, on ramène les dents 8 du peigne 7 dans une position horizontale ou ayant passé l'horizontale, ce qui fait que les intérieurs enrobés 2' viennent se loger dans l'angle formé par les dents du peigne. A l'aide de l'anse 17, on déplace le peigne et on le refait pivoter légèrement sur l'avant pour déposer les intérieurs enrobés 2', par rangées, sur un marbre.

Il est à remarquer que le peigne multiple 7 peut être mû manuellement ou automatiquement, selon le degré d'automatisation désiré.

A titre indicatif, on peut signaler que la grille est constituée de barres parallèles, coudées en forme de toit d'usine, dont l'épaisseur peut être par exemple de 15/10 mm. Le peigne multiple a des dimensions correspondantes et des épaisseurs de l'ordre de 5/10 mm ce qui lui permet de passer à la fois entre les intérieurs et les râcleurs. La grille peut contenir autant de rangées, délimitées par la forme en toit d'usine, que nécessaire, par exemple 4 ou 5; sa largeur peut être calculée de manière à pouvoir disposer de 5 à 20 intérieurs, par exemple 6 ou 7. On remarquera évidemment que le peigne permet de saisir, soulever et sortir les produits enrobés par rangées entières et toutes les rangées simultanément.

Comme exposé précédemment, l'angle formé par les deux pans de la grille est inférieur à 90°. Ainsi, la partie inférieure de l'intérieur est en appui et on ne risque pas d'avoir des défauts d'enrobage sur le côté. Cet angle est par exemple de 65°.

L'appareil permet de traiter toutes sortes d'intérieurs et, avec les dimmensions précitées, on peut récupérer simultanément des rangées d'intérieurs de diamètre de l'ordre de 18 à 19 mm, ce qui concerne environ 95 % de la production. Pour des intérieurs dont l'épaisseur dépasse 19 mm, on peut utiliser également l'appareil, avec les dimensions précitées, en les trempant tous ensemble, mais en ne les récupérant que rangées par rangées à l' aide d'un peigne unique.

L'utilisation de l'appareil est d'une simplicité remarquable. On commence par disposer les intérieurs 2, par rangée, sur la grille 1, ces rangées venant prendre place dans les coins inférieurs du toit d'usine. On place alors les peignes en position (i), illustrée à la figure 5, de façon à maintenir les intérieurs 2 pressés contre la grille 1.

A l'aide de la poignée, on descend l'ensemble dans le bac d'immersion 6, pendant un temps suffisant calculé d' après les caractéristiques de la matière d'enrobage et sa température, puis on ressort l'ensemble au dessus du bac 6.

A l'aide du râcleur 14, on élimine l'excédent de la matière d'enrobage par un mouvement de va et vient.

On fait alors reculer le peigne 7 pour l'amener dans la position (ii) illustrée à la figure 6 et on repousse le peigne 7 en avant pour que les dents 8 viennent s'insérer dans la grille 1 et saisir les produits enrobés 2' par en dessous. A l'aide de l'anse 14, on fait remonter le peigne vers l' avant, dans le sens indiqué par (iii) sur la figure 6. Toutes les rangées de produits enrobés 2' sont soulevés et retirés de la grille 1 et sont déposés sur un marbre.

L'appareil peut être utilisé dans toutes les industries devant procéder à l'enrobage d'intérieurs, notamment dans

- 9 -                          0171338

l'industrie alimentaire. On peut ainsi enrober des bonbons, des bâtonnets ou des pralines par des matières d'
enrobages tels que les chocolats, les glaces royales, les
pâtes à glacer et les fondants.

REVENDICATIONS

1.      Appareil d'enrobage par immersion caractérisé en ce qu'il comprend

    - une grille (1) servant de support pour les produits à immerger, cette grille (1) ayant une forme en toit d'usine,

    - un bâti (5) permettant de descendre la grille (1) pour l'immersion, puis de la remonter,

    - un peigne (7) dont les dents (8) prennent appui dans une première position (i) sur les produits (2) à immerger de façon à les maintenir pressés  contre la grille (1) lors de l'immersion, les empêchant de flotter, et dont les dents (8), dans une deuxième position (ii), s'insèrent dans la grille (1) pour venir saisir les produits (2) par dessous et, dans une troisième position (iii), les dégager de la grille (1),

    - un guide (12) servant à conduire le peigne (7) dans ses déplacements de droite à gauche et vice versa, pour l' amener à volonté dans les première  (i), deuxième (ii) et troisième (iii) positions.

2.      Appareil selon la revendication 1, caractérisé en ce que le peigne (7) est multiple.

3.      Appareil selon la revendication 1 ou 2, caractérisé en ce qu'il comprend un râcleur (14) pour éliminer l'excédent d'enrobage avant dégagement des produits (2') enrobés de la grille (1).

4.      Appareil selon la revendication 1, caractérisé en ce que le guide (12) est constitué de deux parois latérales

- 11 -    0171338

(4) sur lesquelles est fixée la grille (1) et que ces parois (4) sont découpées en forme de toit d'usine tronqué dont les angles d'inclinaison correspondent aux angles de la forme en toit d'usine de la grille (1), des ergots (11) extérieurs équipant le peigne (7) venant prendre appui sur les parois latérales (4).

5. Appareil selon les revendications 1 et 3, caractérisé en ce que le râcleur (14) est multiple et est constitué de barres (141) de râclage, traversant les parois latérales (4) par des lumières (15) de guidage inclinées parallèlement à l'inclinaison ($\alpha$) de la grille (1) et rendues solidaires les unes des autres.

6. Appareil selon la revendication 5, caractérisé en ce que les barres (141) de râclage sont rendues solidaires au moyen d'organes (142) de commande coudés, se faisant face, ces organes coudés (142) étant également guidés chacun par un ergot (143) prenant place dans une lumière (16) supplémentaire ménagée dans chaque paroi latérale (4).

0171338

**FIG. 1**

**FIG. 3**

**FIG. 2**

0171338

FIG.4

FIG.6

(iii)

(ii)

FIG.5

(i)